# EUROPEAN PATENT SPECIFICATION

(11) **EP 2 140 733 B1**
(45) Date of publication and mention of the grant of the patent: **19.06.2013**
(21) Application number: 08737850.1
(22) Date of filing: 15.04.2008
(51) Int. Cl.: H05B 33/08

(54) **LIGHTING DEVICE WITH A LED USED FOR SENSING**
BELEUCHTUNGSVORRICHTUNG MIT LED FÜR ABTASTUNG
DISPOSITIF D'ÉCLAIRAGE AVEC UNE DEL UTILISÉE POUR UNE DÉTECTION

(30) Priority: 20.04.2007 EP 07106600
(43) Date of publication of application: 06.01.2010
(73) Proprietor: Koninklijke Philips Electronics N.V., 5621 BA Eindhoven (NL)
(72) Inventor: VAN DER VEEN, Geert, W., NL-5656 AE Eindhoven (NL); KUPPEN, Johan, W., H., NL-5656 AE Eindhoven (NL); FOGGI, Marco, NL-5656 AE Eindhoven (NL)
(74) Representative: Bekkers, Joost J.J.
(86) International application number: PCT/IB2008/051426
(87) International publication number: WO 2008/129453

(56) References cited:
- EP-A- 1 701 589
- US-A- 6 144 165

## Description

### FIELD OF THE INVENTION

The present invention relates in general to the field of lighting devices, more particularly to lighting devices in which one or more LEDs are used for generating light.

### BACKGROUND OF THE INVENTION

As embodiment of electrically powered light source, an LED is a relatively recent development since the incandescent lamp and the gas discharge lamp. Although LEDs are known for use as indicator for a relatively long time, typically as POWER ON indicator in a consumer appliance, a rather recent development is the use as illumination light source, which became possible with the development of power LEDs. LEDs are nowadays used for ambiance lighting, for signaling (traffic lights and the like), and even for tail lights, brake lights and head lights of automobiles.

### SUMMARY OF THE INVENTION

Light sources can be controlled in response of a user action, for instance a user actuating a switch, or automatically in response to some external event or condition, in which case an event detector or condition sensor is needed. A specific example is ambient light level: it may be desirable to adapt the light output of a light source in dependency of the ambient light level. For instance, during the day, a traffic light needs to have a relatively high light output in order to be visible at some distance, but during the night the light output of the traffic light may be reduced. Thus, a sensor is needed for sensing the ambient light level.

In another example, master/slave behavior of illumination may be desirable. In a relatively large area which is illuminated by several light sources, it may be cumbersome for the user to have to switch on all light sources individually, while it is not always possible or desirable to connect all light sources to one switch. Additional control wires for multiple luminaires are expensive, in particular when an existing lighting system is upgraded to a controllable system and additional wiring is required. As a solution, it may be possible to provide each light source with a light sensor: as soon as the sensor senses that another light source is switched on, it may switch on its associated light source.

For applications of the above or similar type, it would be customary to have separate sensors. However, sensors add to the costs of such application.

An object of the present invention is to provide the same functionality at reduced costs.

According to an important aspect of the present invention, an LED is used as a light source as well as a light sensor.

Further advantageous elaborations are mentioned in the dependent claims.

It is noted that it is known per se that an LED has a property of photosensitivity so that it is possible that an LED is used as a light sensor. For instance, reference is made to US-6.617.560. However, in this document the LED used for light sensing is exclusively used for light sensing: it is not used for light production. In contrast, according to the present invention, an LED is advantageously used for light sensing as well as for light production.

EP-1.701.589, in its paragraph [0035], discloses that an LED can be used as an ambient light sensor between two flash pulses of the LED.

### BRIEF DESCRIPTION OF THE DRAWINGS

These and other aspects, features and advantages of the present invention will be further explained by the following description of one or more preferred embodiments with reference to the drawings, in which same reference numerals indicate same or similar parts, and in which:
Figure 1 is a block diagram schematically showing an illumination device;
Figure 2 is an exemplary graph schematically illustrating LED current as a function of time;
Figure 3 is a block diagram schematically showing an illumination device according to the present invention;
Figure 4A is a block diagram comparable to figure 3, schematically illustrating a measuring state;
Figure 4B is a block diagram comparable to figure 3, schematically illustrating a drive state;
Figure 5A is a block diagram comparable to figure 4A, schematically illustrating a particular embodiment;
Figure 5B is a block diagram comparable to figure 4A, schematically illustrating a particular embodiment;
Figure 5C is a block diagram comparable to figure 3, schematically illustrating a particular embodiment.

### DETAILED DESCRIPTION OF THE INVENTION

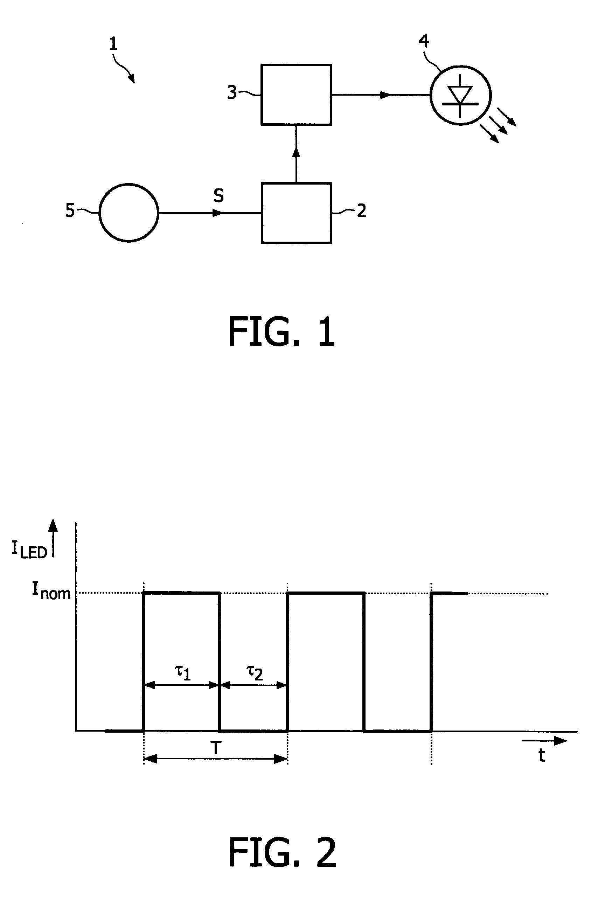

Figure 1 is a block diagram schematically showing an illumination device 1, comprising at least one LED 4. Current for the LED 4 is provided by a LED driver 3, which is controlled by a controller 2 on the basis of a sensor signal S received from a light sensor 5 at a sensor input of the controller 2.

Figure 2 is a graph schematically illustrating LED current I_{LED} (vertical axis) as a function of time (horizontal axis), in order to show a possible implementation of dimming by means of PWM or duty cycle control. The LED is either ON or OFF, with the current having a nominal value I_{NOM} or zero, respectively. The current is switched on a regular basis from I_{NOM} to zero and back. The LED is ON during a time interval τ1, and OFF during a time interval τ2. A current period T is defined as T = τ1 + τ2, a current frequency f is defined as f= 1/T. A duty cycle Δ is defined as Δ= τ1/T.

The controller 2 controls τ1 and τ2. Normally, T is kept constant, for instance at a value of about 600 Hz. By setting the duty cycle Δ, the average LED current and hence the average light intensity produced by the LED can be set, as will be clear to a person skilled in the art.

In the state of the art, as illustrated in figure 1, the light sensor 5 is a separate sensor. According to the present invention, the LED 4 itself can also be used as light sensor.

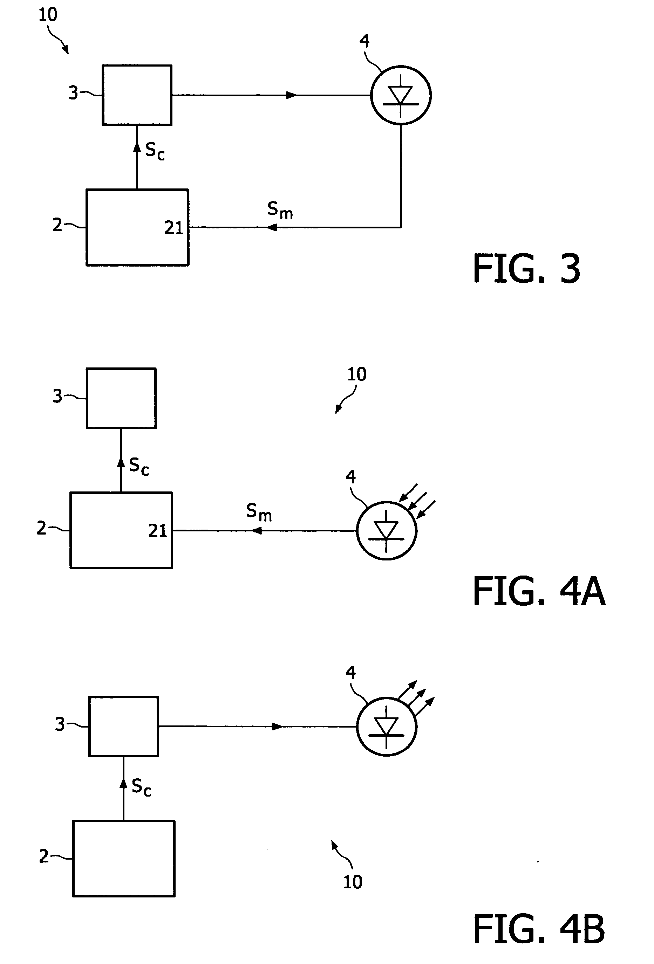

Figure 3 is a block diagram schematically showing an illumination assembly 10 according to the present invention. As compared to figure 1, the separate light sensor 5 is omitted and the LED 4 is coupled to a sensor input 21 of the controller 2. The controller 2 is capable of operating in a drive state and in a measuring state. The controller 2 is adapted, during operation, to frequently switch from its drive state to its measuring state and back. The switching may be done regularly or irregularly, regularly being preferred.

The operation is as follows. During a measuring state, illustrated in figure 4A, the controller 2 generates its control signal Sc for the driver 3 such that the driver does not generate any LED current; the LED is OFF. The LED generates a photocurrent Sm, which is received by the controller 2 at its sensor input 21 and which is indicative of a light intensity sensed by the LED. The controller 2 processes the input signal Sm and makes a decision on the desired light output of the LED 4.

Then, the controller 2 switches to its drive state. During the drive state, illustrated in figure 4B, the controller 2 generates its control signal Sc for the driver 3 such that the driver generates LED current I_{NOM}; the LED is ON. The LED output signal Sm during this state is not a measure of light intensity sensed by the LED, and may be ignored by the controller 2. In order to assure that the average light output of the LED corresponds to the desired light output as determined on the basis of the measuring signal Sm in the measuring state, the controller sets the duration τ1 of the drive state to a suitable value. For instance, if continuous driving of the LED at current level I_{NOM} would result in a light output Lmax, while the desired light output is indicated as Ld (lower than Lmax), the controller 2 may set the duration τ1 of the drive state equal to τ1 = (Ld/Lmax)·T, wherein the LED current frequency f= 1/T is kept constant.

It follows that the duration of the measuring state fulfils τ2 = T - τ1, and is reduced with increasing light output. For obtaining a reliable measuring result, the duration of the measuring state should be larger than a certain minimum duration τ_{MIN}. In practice, τ_{MIN} may be about 100 µs. This corresponds to a maximum allowable value for τ1, and hence a maximum obtainable value for the light output lower than Lmax. In practice, this is acceptable. However, if a higher light output is desirable, it is possible to reduce the LED current frequency, or it is possible that the measuring state is not included in every current period. For instance, if a light output of 0.93·Lmax is desired, and the minimum duration τ_{MIN} is equal to 0.1·T, it is possible to alternate current periods having duty cycle Δ = 0.9 (including a measuring state) with current periods having duty cycle Δ = 0.96 (without a measuring state).

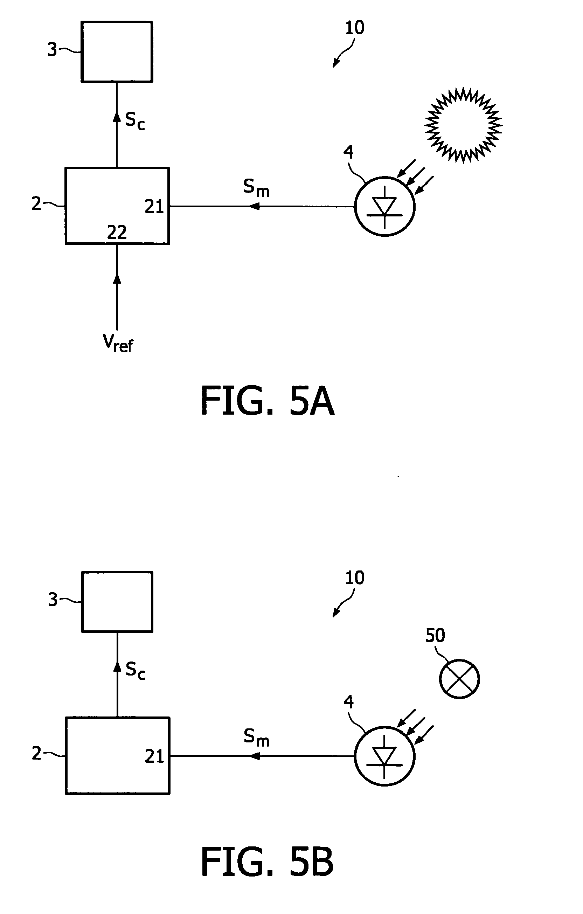

In a possible embodiment, illustrated in figure 5A, the assembly 10 is implemented as an adaptive signaling light, for instance a traffic light. The controller 2 may have a reference input 22 receiving a reference value Vref. The controller 2 compares the measuring signal Sm with the reference value Vref. In dark circumstances, the measuring signal Sm will be relatively low; in such situation, the controller 2 will set the duration τ1 of the drive state at a relatively low value, for instance equal to 0.45·T, so that the LED is operated at a duty cycle Δ = 45%. In bright daylight, the measuring signal Sm will be relatively high; in such situation, the controller 2 will set the duration τ1 of the drive state at a relatively high value, for instance equal to 0.90·T, so that the LED is operated at a duty cycle Δ = 90%. As a result, the light output of the signaling light is reduced by 50% during dark circumstances.

In a possible embodiment, illustrated in figure 5B, the assembly 10 is implemented as an automatically switching illumination system, responsive to other light sources 50. The measuring signal Sm indicates whether such other light source 50 is ON or OFF. If the measuring signal Sm indicates that such other light source 50 is ON, the controller 2 will set the duration τ1 of the drive state at a predetermined value, for instance equal to 0.90·T, so that the LED is ON at a certain predetermined light output. If the measuring signal Sm indicates that such other light source 50 is OFF, the controller 2 will set the duration τ1 of the drive state to be equal to zero, so that the LED is OFF. As a result, the light output of the illumination system is automatically switched ON or OFF, following the other light source 50 being switched ON or OFF, respectively.

The other light source may for instance be public street lighting, and the assembly 10 may be part of an illumination system illuminating parts of a house or a garden. If the public street lighting is switched ON, the illumination system is automatically switched ON as well.

The other light source 50 may in turn also be implemented in accordance with the present invention. Thus, it is possible to provide a group of LEDs which are all automatically switched ON or OFF in response to a first light source being switched ON or OFF, respectively (master/slave configuration). All LEDs may be responsive to one common first light source, or the LEDs may be arranged in a serial arrangement so that each LED is responsive to a preceding LED in the series. The first light source may be switched manually by a user, or may be switched by a timer.

The LED 4 and the other light source 50 may be integrated in one common luminaire. For instance, the other light source 50 may be a TL lamp in a hybrid luminaire: when the TL lamp is switched ON, the LED(s) is/are automatically switched ON as well.

The controller 2 may distinguish artificial light sources (such as public street lighting) from sun light in view of the fact that the artificial light sources will typically be modulated (mains: 100 Hz, or HF modulation).

The light of the other light source 50 may be modulated according to some digital protocol in order to communicate data. The controller 2 will follow this modulation so that the light from the LED 4 is likewise modulated; in that case, the assembly 10 acts effectively as a repeater for the data.

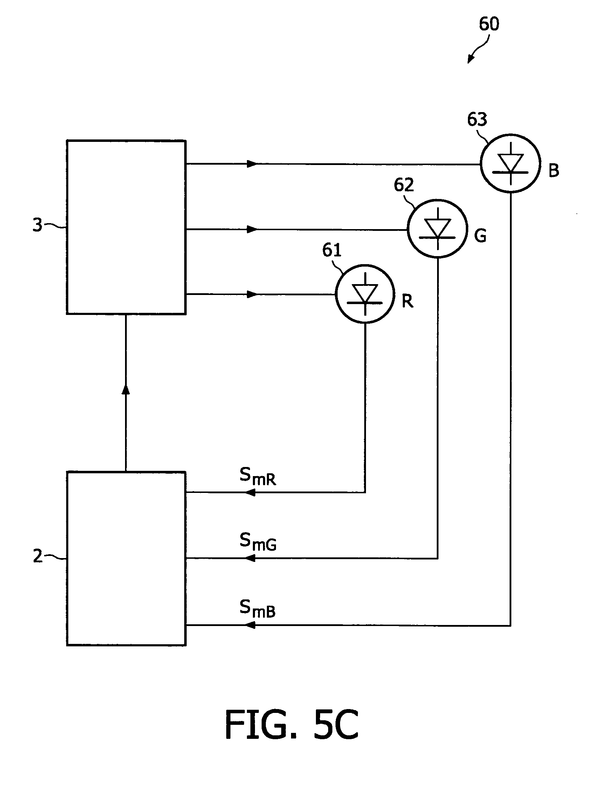

In a possible embodiment, illustrated in figure 5C, the assembly 60 is color sensitive. Instead of only one LED 4, the assembly comprises a plurality of different LEDs, having mutually different design so that they emit mutually different color. Then, also their photo sensitivities are mutually different; if the number of different LEDs is at least equal to three, these LEDs can sense the color point of the light.

In figure 5C, the assembly 10 comprises three LEDs 61, 62, 63 for red, green and blue light, respectively. They generate measuring signals S_{mR}, S_{mG}, S_{mB}, respectively, which signals are received by the controller 2. From these three measuring signals, the controller 2 calculates the color point of the light (either ambient light, or light produced by one or more other light sources) as received by the three LEDs. In a possible embodiment, the controller 2 is designed to drive the three LEDs such that their combined light has the same color point as the measured color point. As a result, the light output of the illumination system automatically matches the ambient light.

It is noted that the technology of driving three (or more) light LEDs such that their combined light has a certain desired color point by suitably setting the duty cycles of the three LEDs is known per se and needs no further explanation here.

It is noted that it may be desirable, though not essential, to assure that there are moments when all LEDs are OFF simultaneously. If the controller performs the light measurements during these moments, it is assured that the measurement of a certain LED is not affected by the light of another LED. One way of achieving this is if the current periods of the three LEDs are mutually equal and the measuring periods of the LEDs have a certain overlap. It should be clear that mutually different duty cycles are still possible this way.

It is further noted that each LED 61, 62, 63 may be driven by a separate driver, all drivers being controlled by the controller, but it is also possible that the LEDs are driven by one common driver, adapted for driving multiple LEDs independently, or adapted for driving multiple LEDs simultaneously with synchronized current periods.

Summarizing, the present invention provides a lighting device 10, comprising:
- a LED 4;
- a driver 3 for driving the LED;
- a controller 2 for controlling the driver.

The LED is coupled to a sensor input 21 of the controller.

The controller regularly switches from a drive state to a measuring state and back.

In the measuring state, the controller controls the driver such that the driver does not generate any LED current. The LED produces a measuring signal Sm indicating a measured light level. The controller processes the input signal Sm received from the LED, and makes a decision on the desired light output of the LED.

In the drive state, the controller controls the driver such that the average light output produced by the LED corresponds to the desired light output as determined in the measuring state.

While the invention has been illustrated and described in detail in the drawings and foregoing description, it should be clear to a person skilled in the art that such illustration and description are to be considered illustrative or exemplary and not restrictive. The invention is not limited to the disclosed embodiments; rather, several variations and modifications are possible within the protective scope of the invention as defined in the appending claims.

For instance, although the above example describes duty cycle control as a possible method for varying the light output of the LED, it is also possible that the LED is driven on the basis of another known or future method, such as PWM, FM, AM, PCM of the LED current.

Further, although in the drawings the controller and driver are illustrated as separate blocks, it is noted that the controller and driver may be integrated into one device.

For instance, although in the above example the controller makes a decision on the desired light output in each measuring state, and uses this decision in the next drive state, such is not necessary. In principle, it is possible that the controller only collects measuring data during the subsequent measuring states, to be able to produce a log of measurements. It is further possible that the controller needs more time to process the measuring data, so that an adaptation of the LED driving control signal is only executed a few state cycles later. It is further possible that the controller calculates an average value of multiple measuring data, and adapts its control signal on the basis of such average.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

In the above, the present invention has been explained with reference to block diagrams, which illustrate functional blocks of the device according to the present invention. It is to be understood that one or more of these functional blocks may be implemented in hardware, where the function of such functional block is performed by individual hardware components, but it is also possible that one or more of these functional blocks are implemented in software, so that the function of such functional block is performed by one or more program lines of a computer program or a programmable device such as a microprocessor, microcontroller, digital signal processor, etc.

## Claims

1. Automatically switching illumination system, the system comprising a lighting device which comprises:
- at least one LED (4);
- a driver (3) for driving the LED;
- a controller (2) for controlling the driver, the controller having a sensor input (21) for receiving a measuring signal (Sm) indicating a measured light level;
wherein the LED (4) is coupled to the sensor input of the controller;
wherein the controller is capable of operating in a drive state and in a measuring state;
wherein the controller is adapted, during operation, to alternate between its drive state and its measuring state;
wherein, in the drive state, the controller is adapted to generate its control signal (Sc) for the driver such that the LED generates light;
and wherein, in the measuring state, the controller is adapted to generate its control signal for the driver such that the driver does not generate any LED current, and to process the input signal (Sm) received from the LED as a light measuring signal;
so that one and the same LED is alternatively used for generating light and sensing light;
**characterized in that** the system is responsive to at least one other light source (50);
wherein the controller is adapted, if the measuring signal (Sm) indicates that such other light source (50) is ON, to set the average light output at a predetermined value larger than zero;
and wherein the controller is adapted, if the measuring signal (Sm) indicates that such other light source (50) is OFF, to set the average light output to be equal to zero.

2. Color-sensitive illumination assembly (60), comprising:
- a plurality of LEDs (61, 62, 63);
- a driver (3) for driving the LEDs;
- a controller (2) for controlling the driver, the controller having sensor inputs for receiving measuring signals (S_{mR}, S_{mG}, 5_{mB}) indicating a measured light level;
wherein the LEDs (61, 62, 63) are coupled to the respective sensor inputs of the controller;
wherein the controller, in respect of each individual LED, is capable of operating in a drive state and in a measuring state;
wherein the controller, in respect of each individual LED, is adapted, during operation, to alternate between its drive state and its measuring state;
wherein, in the drive state for an individual LED, the controller is adapted to generate its control signal for the driver such that this individual LED generates light;
and wherein, in the measuring state for an individual LED, the controller is adapted to generate its control signal for the driver such that the driver does not generate any LED current for this individual LED, and to process the input signal (Sₘ) received from this individual LED as a light measuring signal;
so that one and the same individual LED is alternatively used for generating light and sensing light;
wherein, in the measuring state for an individual LED, the controller is adapted to make a decision on the desired light outputs of this individual LED on the basis of the input signal received from this individual LED;
and wherein, in the drive state for an individual LED, the controller is adapted to generate its control signal for the driver such that the average light output produced by this individual LED corresponds to the desired light output as determined in the measuring state;
wherein the controller is designed to calculate from the measuring signals (S_{mR}, S_{mG}, 5_{mB}) the color point of the light as received by the LEDs;
and wherein the controller is designed to drive the LEDs such that their combined light has the same color point as the measured color point, so that the light output of the illumination system automatically matches the ambient light.

3. Color-sensitive illumination assembly according to claim 2, wherein the controller is designed to assure that the measuring states for all LEDs have a certain overlap.

## Patentansprüche

1. Beleuchtungssystem mit automatischer Umschaltung, wobei das System eine Beleuchtungseinrichtung umfasst, die aufweist.
- mindestens eine LED (4);
- einen Treiber (3) zur Ansteuerung der LED;
- eine Steuereinrichtung (2) zur Steuerung des Treibers, wobei die Steuereinrichtung einen Sensoreingang (21) zum Empfang eines eine gemessene Lichtintensität anzeigenden Messsignals (Sm) aufweist;
wobei die LED (4) mit dem Sensoreingang der Steuereinrichtung gekoppelt ist;
wobei die Steuereinrichtung imstande ist, in einem Ansteuerungszustand und in einem Messzustand zu arbeiten;
wobei die Steuereinrichtung so eingerichtet ist, dass sie bei Betrieb zwischen dem Ansteuerungszustand und dem Messzustand wechselt;
wobei die Steuereinrichtung in dem Ansteuerungszustand so eingerichtet ist, dass sie ihr Steuersignal (Sc) für den Treiber so erzeugt, dass die LED Licht erzeugt;
und wobei die Steuereinrichtung in dem Messzustand so eingerichtet ist, dass sie ihr Steuersignal für den Treiber so erzeugt, dass der Treiber keinen LED-Strom erzeugt und das von der LED empfangene Eingangssignal (Sm) als ein Lichtmesssignal verarbeitet;
so dass ein und dieselbe LED abwechselnd zum Erzeugen von Licht und zum Messen von Licht verwendet wird;
**dadurch gekennzeichnet, dass** das System auf mindestens eine weitere Lichtquelle (50) anspricht;
wobei die Steuereinrichtung so eingerichtet ist, dass sie, wenn das Messsignal (Sm) anzeigt, dass eine solche weitere Lichtquelle (50) eingeschaltet ist, den durchschnittlichen Lichtstrom auf einen vorher festgelegten Wert einstellt, der größer als Null ist;
und wobei die Steuereinrichtung so eingerichtet ist, dass sie, wenn das Messsignal (Sm) anzeigt, dass eine solche weitere Lichtquelle (50) ausgeschaltet ist, den durchschnittlichen Lichtstrom so einstellt, dass er gleich Null ist.

2. Farbempfindliche Beleuchtungsanordnung (60) mit:
- mehreren LEDs (61, 62, 63);
- einem Treiber (3) zur Ansteuerung der LEDs;
- einer Steuereinrichtung (2) zur Steuerung des Treibers, wobei die Steuereinrichtung Sensoreingänge zum Empfang von eine gemessene Lichtintensität anzeigenden Messsignalen (S_{mR}, S_{mG}, S_{mB}) aufweist;
wobei die LEDs (61, 62, 63) mit den jeweiligen Sensoreingängen der Steuereinrichtung gekoppelt sind,
wobei die Steuereinrichtung im Hinblick auf jede einzelne LED imstande ist, in einem Ansteuerungszustand und in einem Messzustand zu arbeiten;
wobei die Steuereinrichtung im Hinblick auf jede einzelne LED so eingerichtet ist, dass sie bei Betrieb zwischen ihrem Ansteuerungszustand und ihrem Messzustand wechselt;
wobei die Steuereinrichtung in dem Ansteuerungszustand für eine einzelne ,LED so eingerichtet ist, dass sie ihr Steuersignal für den Treiber so erzeugt, dass diese einzelne LED Licht erzeugt;
und wobei die Steuereinrichtung in dem Messzustand für eine einzelne LED so eingerichtet ist, dass sie ihr Steuersignal für den Treiber so erzeugt, dass der Treiber keinen LED-Strom für diese einzelne LED erzeugt und das von dieser einzelnen LED empfangene Eingangssignal (Sₘ) als ein Lichtmesssignal verarbeitet;
so dass ein und dieselbe LED abwechselnd zum Erzeugen von Licht und zum Messen von Licht verwendet wird;
wobei die Steuereinrichtung in dem Messzustand für eine einzelne LED so eingerichtet ist, dass sie aufgrund des von dieser einzelnen LED empfangenen Eingangssignals eine Entscheidung über die gewünschten Lichtströme dieser einzelnen LED trifft;
und wobei die Steuereinrichtung in dem Ansteuerungszustand für eine einzelne LED so eingerichtet ist, dass sie ihr Steuersignal für den Treiber so erzeugt, dass der von dieser einzelnen LED erzeugte durchschnittliche Lichtstrom dem gewünschten Lichtstrom, wie in dem Messzustand ermittelt, entspricht;
wobei die Steuereinrichtung so ausgeführt ist, dass sie aus den Messsignalen (S_{mR}, S_{mG}, S_{mB}) den Farbpunkt des Lichts, wie von den LEDs empfangen, berechnet;
und wobei die Steuereinrichtung so ausgeführt ist, dass sie die LEDs so ansteuert, dass deren kombiniertes Licht den gleichen Farbpunkt wie den gemessenen Farbpunkt aufweist, so dass der Lichtstrom des Beleuchtungssystems automatisch dem Umgebungslicht entspricht.

3. Farbempfindliche Beleuchtungsanordnung nach Anspruch 2, wobei die Steuereinrichtung so ausgeführt ist, dass sie sicherstellt, dass die Messzustände für alle LEDs eine bestimmte Überlappung aufweisen.

## Revendications

1. Système d'éclairage à commutation automatique, le système comprenant un dispositif d'éclairage qui comprend :
- au moins une LED (4) ;
- un excitateur (3) pour exciter la LED;
- un dispositif de commande (2) pour commander l'excitateur, le dispositif de commande comportant une entrée de capteur (21) pour recevoir un signal de mesure (Sm) indiquant un niveau lumineux mesuré ;
dans lequel la LED (4) est couplée à l'entrée de capteur du dispositif de commande ;
dans lequel le dispositif de commande est capable de fonctionner dans un état d'excitation et dans un état de mesure ;
dans lequel le dispositif de commande est adapté, durant le fonctionnement, pour alterner entre son état d'excitation et son état de mesure;
dans lequel, dans l'état d'excitation, le dispositif de commande est adapté pour générer son signal de commande (Sc) pour l'excitateur de sorte que la LED génère de la lumière ;
et dans lequel, dans l'état de mesure, le dispositif de commande est adapté pour générer son signal de commande pour l'excitateur de sorte que l'excitateur ne génère aucun courant de LED, et pour traiter le signal d'entrée (Sm) reçu à partir de la LED en tant que signal de mesure de lumière ;
pour qu'une et la même LED soit utilisée en alternance pour générer de la lumière et détecter de la lumière ;
**caractérisé en ce que** le système répond à au moins une autre source lumineuse (50) ;
dans lequel le dispositif de commande est adapté, si le signal de mesure (Sm) indique qu'une telle autre source lumineuse (50) est allumée, pour régler la lumière de sortie moyenne à une valeur prédéterminée supérieure à zéro ;
et dans lequel le dispositif de commande est adapté, si le signal de mesure (Sm) indique qu'une telle autre source lumineuse (50) est éteinte, pour régler la lumière de sortie moyenne pour qu'elle soit égale à zéro.

2. Ensemble d'éclairage à sensibilité chromatique (60), comprenant :
- une pluralité de LEDs (61, 62, 63) ;
- un excitateur (3) pour exciter les LEDs;
- un dispositif de commande (2) pour commander l'excitateur, le dispositif de commande comportant des entrées de capteur pour recevoir des signaux de mesure (S_{mR}, S_{mG}, S_{mB}) indiquant un niveau lumineux mesuré ;
dans lequel les LEDs (61, 62, 63) sont couplées aux entrées de capteur respectives du dispositif de commande ;
dans lequel le dispositif de commande, en ce qui concerne chaque LED individuelle, est capable de fonctionner dans un état d'excitation et dans un état de mesure ;
dans lequel le dispositif de commande, en ce qui concerner chaque LED individuelle, est adapté, durant le fonctionnement, pour alterner entre son état d'excitation et son état de mesure ;
dans lequel, dans l'état d'excitation pour une LED individuelle, le dispositif de commande est adapté pour générer son signal de commande pour l'excitateur de sorte que cette LED individuelle génère de la lumière ;
et dans lequel, dans l'état de mesure pour une LED individuelle, le dispositif de commande est adapté pour générer son signal de commande pour l'excitateur de sorte que l'excitateur ne génère aucun courant de LED pour cette LED individuelle, et pour traiter le signal d'entrée (Sₘ) reçu à partir de cette LED individuelle en tant que signal de mesure de lumière ;
pour qu'une et la même LED individuelle soit utilisée en alternance pour générer de la lumière et détecter de la lumière ;
dans lequel, dans l'état de mesure pour une LED individuelle, le dispositif de commande est adapté pour prendre une décision concernant les lumières de sortie souhaitées de cette LED individuelle en fonction du signal d'entrée reçu à partir de cette LED individuelle;
et dans lequel, dans l'état d'excitation pour une LED individuelle, le dispositif de commande est adapté pour générer son signal de commande pour l'excitateur de sorte que la lumière de sortie moyenne produite par cette LED individuelle corresponde à la lumière de sortie souhaitée telle qu'elle est déterminée dans l'état de mesure ;
dans lequel le dispositif de commande est conçu pour calculer, à partir des signaux de mesure (S_{mR}, S_{mG}, S_{mB}), le point de couleur de la lumière telle qu'elle est reçue par les LEDs ;
et dans lequel le dispositif de commande est conçu pour exciter les LEDs de sorte que leur lumière combinée ait le même point de couleur que le point de couleur mesuré, pour que la lumière de sortie du système d'éclairage corresponde automatiquement à la lumière ambiante.

3. Ensemble d'éclairage à sensibilité chromatique selon la revendication 2, dans lequel le dispositif de commande est conçu pour garantir que les états de mesure pour toutes les LEDs présentent un certain chevauchement.
